# EUROPÄISCHE PATENTSCHRIFT

(11) **EP 1 207 967 B1**
(45) Veröffentlichungstag und Bekanntmachung des Hinweises auf die Patenterteilung: **27.08.2003**
(21) Anmeldenummer: 99946114.8
(22) Anmeldetag: 03.09.1999
(51) Int. Cl.: B05C 3/10, B65G 49/04

(54) **VERFAHREN ZUM EIN- UND AUSBRINGEN VON WERKSTÜCKEN IN BZW. AUS EINEM OBERFLÄCHENBEHANDLUNGSBEREICH, OBERFLÄCHENBEHANDLUNGSVORRICHTUNG UND ANLAGE ZUR OBERFLÄCHENBEHANDLUNG**
METHOD FOR INTRODUCING AND REMOVING WORKPIECES INTO OR FROM A SURFACE TREATMENT AREA, A SURFACE TREATMENT DEVICE AND AN ARRANGEMENT FOR SURFACE TREATMENT
PROCEDE POUR INTRODUIRE DES PIECES DANS UNE ZONE DE TRAITEMENT DE SURFACE ET FAIRE SORTIR LESDITES PIECES DE LADITE ZONE, DISPOSITIF ET INSTALLATION DE TRAITEMENT DE SURFACE

(43) Veröffentlichungstag der Anmeldung: 29.05.2002
(73) Patentinhaber: ABB Fläkt Aktiebolag, 120 86 Stockholm (SE)
(72) Erfinder: KREUZER, Bernd, D-36341 Lauterbach/Maar (DE)
(74) Vertreter: HOFFMANN - EITLE
(86) Internationale Anmeldenummer: EP9906493
(87) Internationale Veröffentlichungsnummer: WO01017691

(56) Entgegenhaltungen:
- WO-A-98/15359

## Beschreibung

### Technisches Gebiet

Die Erfindung betrifft ein Verfahren zum Ein- und Ausbringen von Werkstücken, insbesondere Fahrzeugkarosserien, in bzw. aus einem zur Oberflächenbehandlung der Werkstücke dienenden Behandlungsbereich durch einen Ein- bzw. Ausdrehvorgang. Bei dem Verfahren wird ein Werkstück auf einem Halterungsgestell lösbar befestigt. Das Halterungsgestell wird mit dem zumindest einen darauf befindlichen Werkstück mit im wesentlichen konstanter Geschwindigkeit kontinuierlich translatorisch bewegt. Zumindest am Anfang und am Ende des Behandlungsbereiches wird das Werkstück während der translatorischen Bewegung gleichzeitig um eine zur Bewegungsrichtung des Halterungsgestells senkrecht ausgerichtete Drehachse gedreht. Mit zumindest am Anfang und am Ende sind die Zonen der Behandlungsbereiche gemeint, die sich Eingangs und Ausgangs eines Behandlungsbeckens, einer Behandlungskabine etc. befinden. Es sei hier herausgestellt, dass sich die Zonen auch bis vor und nach den Behandlungsbereichen erstrecken können. Darüber hinaus kann eine Drehung auch zusätzlich weit im Behandlungsbereich erfolgen.

Die Erfindung betrifft ferner eine Vorrichtung zur , Oberflächenbehandlung von Werkstücken in einem oder mehreren Behandlungsbereichen mit zumindest einem Halterungsgestell zur Aufnahme eines oder mehrerer Werkstücke. Das Halterungsgestell umfasst eine Aufnahmevorrichtung, mit der das Werkstück am Halterungsgestell lösbar anbringbar ist. Es weist außerdem eine Drehachse auf, um die das Halterungsgestell drehbar ist. In der Vorrichtung ist eine Halterungsgestell-Führungseinrichtung vorhanden, die sich längs eines oder mehrerer Behandlungsbereiche erstreckt und in der die Halterungsgestelle geführt bewegbar sind. Es ist darüber hinaus eine Dreheinrichtung zum Indrehungversetzen des Halterungsgestells um dessen Drehachse vorhanden. Außerdem ist ein Antriebsmittel vorhanden, mit dem das Halterungsgestell kontinuierlich translatorisch in der Halterungsgestell-Führungseinrichtung bewegbar ist.

Schließlich betrifft die Erfindung eine Anlage zur Oberflächenbehandlung von Werkstücken mit mehreren hintereinander angeordneten Behandlungsbereichen. In der Anlage sind mehrere Halterungsgestelle beabstandet voneinander entlang der Behandlungsbereiche kontinuierlich translatorisch bewegbar. Es ist eine Zuführeinrichtung vorhanden, mit dem die Werkstücke in Übereinstimmung mit der Bewegungsgeschwindigkeit der Halterungsgestelle einzeln zuführbar sind. Darüber hinaus ist einem Ausgangsbereich der Anlage eine Abnahmeeinrichtung vorgesehen, mit der bei weiterhin kontinuierlicher Bewegung der Halterungsgestelle die nunmehr behandelten Werkstücke von den Halterungsgestellen abnehmbar und wegtransportierbar sind.

### Stand der Technik

Ein Verfahren, eine Vorrichtung und eine Anlage mit den genannten Merkmalen ist aus der WO 98/15359 bekannt. Zur Vermeidung unnötiger Wiederholungen wird die Offenbarung dieser internationalen Anmeldung durch Bezugnahme hierauf ausdrücklich in die vorliegende Anmeldung mit aufgenommen. Die genannte Druckschrift offenbart bereits das Ein- und Ausdrehen von Werkstücken, insbesondere von Fahrzeugkarosserien, in einen Behandlungsbereich, durch Überlagerung einer translatorischen Bewegung und einer Drehbewegung. Durch diese Bewegungsüberlagerung war es erstmals möglich, die einzelnen Behandlungsbereiche kürzer auszugestalten, da nun jeweils die Ein- bzw. Ausgangsbereiche eines Behandlungsbereiches mit senkrechten bzw. nahezu senkrecht stehenden Stirnwänden versehen werden konnten. Durch die Verkürzung eines Behandlungsbereiches konnten nun auch in einer Anlage mit mehreren hintereinander angeordneten Behandlungsbereichen, wie insbesondere eine Anzahl aneinandergereihter Behandlungsbäder, die Gesamtbaulänge deutlich minimiert werden. Grundsätzlich wurden erstmals die Vorteile einer kontinuierlich fördernden Anlage mit den aus dem Stand der Technik bekannten Vorteile einer Drehvorrichtung vereint. Es hat sich aber gezeigt, dass sogar diese äußerst vorteilhaften Ausführungsformen nach dem Stand der Technik weiterhin verbesserungsfähig sind.

### Darstellung der Erfindung

Das der Erfindung zugrunde liegende technische Problem besteht darin, ein Verfahren bereitzustellen, mit dem das Ein- bzw. Ausbringen eines Werkstückes in bzw. aus einem Behandlungsbereich hinsichtlich der Tiefe des Behandlungsbereiches optimiert werden kann. Der Erfindung liegt weiterhin das technische Problem zugrunde, eine Vorrichtung bereitzustellen, mit der das erfindungsgemäße Verfahren durchführbar ist.

Diese technischen Probleme werden durch ein Verfahren mit den Merkmalen des Anspruchs 1, eine Vorrichtung mit den Merkmalen des Anspruchs 12 und eine Anlage mit den Merkmalen des Anspruchs 29 gelöst. Erfindungsgemäß ist das gattungsgemäße Verfahren dahingehend verbessert, dass die Drehachse während des Drehens angehoben und abgesenkt wird. Eine erfindungsgemäße Vorrichtung ist dadurch gekennzeichnet, dass zumindest im Ein- und Ausgangsbereich des Behandlungsbereiches jeweils eine Drehachsenhöhenverstellung vorhanden ist, mit der die Drehachse eines Halterungsgestells zuerst anhebbar und dann absenkbar ist. Darüber hinaus ist die Drehachseinrichtung in dem Bereich der Drehachsenhöhenverstellung aktivierbar. Eine Anlage der eingangs genannten Art umfasst mehrere derartige Vorrichtungen.

Der Erfindung liegt der Gedanke zugrunde, der bisherigen kombinierten Dreh- und Längsbewegung eines Werkstückes noch eine weitere translatorische Bewegung zu überlagern, nämlich eine translatorische Bewegung, die 90° zur translatorischen Bewegung des Werkstückes längs des Behandlungsbereichs ausgerichtet ist. Durch dieses hierdurch bedingte An- bzw. Absenken des Werkstückes während des Dreh- und Vorwärtsbewegungsvorgangs läßt sich der notwendige Drehradius und damit die Tiefe eines Behandlungsbereich reduzieren. Die Reduzierung in der Tiefe ist mit dem Betrag, um den die Drehachse angehoben wird, identisch. In einer Ausführungsform, bei der ein Werkstück in ein Behandlungsbad, wie beispielsweise eine Tauchlackierung, eingetaucht werden muss, erfolgt zuerst ein Anheben der Drehachse und dann ein Absenken. Während dieses Anhebens und Absenkens erfolgt auch der Drehvorgang. Es ist allerdings festzuhalten, dass der Drehvorgang zur Optimierung auch bereits vor dem Anheben beginnen kann bzw. nach dem Absenken enden kann. Für den Fall, dass ein Werkstück in einen oberhalb der Werkstücklaufbahn befindlichen Behandlungsbereich eingedreht werden soll, wie beispielsweise in eine Lackierkabine, erfolgt zuerst ein Absenken und dann ein Anheben der Drehachse.

Zu den bekannten Vorteilen einer Verfahrensweise gemäß der eingangs genannten, gattungsbildenden Druckschrift ergeben sich zusätzlich folgende Vorteile. Wie bereits erwähnt, können Behandlungsbereiche mit geringerer Höhe (bzw. Tiefe) eingesetzt werden, die einfacher zu fertigen und zu transportieren sind.

Insbesondere Behandlungsbecken sind entsprechend günstiger fertigbar. Bei Behandlungsbecken ist zudem die Druckbelastung durch den geringen Badspiegel erniedrigt, so dass diese Behandlungsbecken für geringere Belastungen ausgelegt werden können. Dadurch sind weniger Materialkosten erforderlich und die fertigungstechnischen Maßnahmen sind kostengünstiger. Durch den geringeren Badspiegel bei gleichbleibender Behandlungsbeckenlänge und -breite nimmt das zum vollständigen Eintauchen des Werkstücks benötigte Badvolumen ab und es wird weniger Badmedium benötigt. Dadurch werden die erforderlichen Mengen an Badmedien in größeren Anlagen beträchtlich verringert. Dadurch ist zudem eine kostengünstigere Behandlung der Werkstücke möglich. Entsprechend der verringerten Menge an Badmedium, können insbesondere bei Vorbehandlungs- und KTL-Anlagen (katalytische Tauchlackierungsanlagen) kleinere Gegenbehälter eingesetzt werden, was wiederum Kosten spart. Durch das reduzierte Badvolumen wird weniger Energie für das Umpumpen und Erwärmen der Badmedien verbraucht. Auch dies trägt beträchtlich zur Kostensenkung bei. Die Vorrichtung läßt sich als Ersatz für vorhandene Pendel- oder Overhead-Fördertechnik einsetzen. Bereits existierende Behandlungsbäder bzw. -tanks und auch die entsprechende Prozeßtechnik können weiterverwendet werden. Bisherige Anlagen gemäß dem eingangs genannten Stand der Technik können entsprechend ohne größeren Aufwand modifiziert werden.

In einer vorteilhaften Ausführungsform des erfindungsgemäßen Verfahrens wird die Drehachse so lange angehoben, bis derjenige Punkt der Werkstück-Halterungsgestell-Kombination, der den größten Abstand zur Drehachse aufweist, im wesentlichen senkrecht unter der Drehachse liegt. Mit demjenigen Punkt der Werkstück-Halterungsgestell-Kombination, der den größten Abstand zur Drehachse aufweist, ist derjenige Punkt gemeint, der in Richtung der translatorischen Längsbewegung des Werkstückes am weitesten von der Drehachse beabstandet ist. Dieser Punkt taucht nämlich am tiefsten in das Becken ein. Kann man diesen Punkt durch das Anheben der Drehachse nach oben versetzen, so kann entsprechend die Tiefe eines Behandlungsbades bzw. die Höhe einer darüberliegenden Kabine erniedrigt werden.

Wie bereits beim Stand der Technik ist es äußerst vorteilhaft, wenn beim Einbringen des Werkstücks in den Behandlungsbereich die Drehgeschwindigkeit und die translatorische Bewegungsgeschwindigkeit in Längsrichtung so aufeinander abgestimmt werden, dass das Vorderteil des Werkstücks nach Beendigung des Drehvorgangs unter Beachtung eines vorbestimmten Sicherheitsabstandes zu einer ersten Stirnwand des Behandlungsbereichs positioniert wird. Der Sicherheitsabstand kann hier durch die kontrollierte, jederzeit geführte Drehbewegung minimiert werden. Damit ist das Eintauchen des Werkstückes in einen Behandlungsbereich nur noch auf den Sicherheitsabstand minimiert, der insbesondere beispielsweise 0,1 - 1 Meter beträgt. Um beispielsweise verschiedene Fahrzeugkarosserien in einer Anlage behandeln zu können, wird der Sicherheitsabstand an die längste Fahrzeugkarosserie angepaßt.

Beim Ausdrehvorgang erfolgt das Heranführen des Werkstückes zu einer zweiten Stirnwand bis zu einem festgelegten Sicherheitsabstand, der dem ersten Sicherheitsabstand im wesentlichen entspricht. Dann erfolgt der Ausdrehvorgang.

Insbesondere ist der Drehvorgang, wie beim Stand der Technik, jederzeit kontrolliert geführt. Das heißt, es erfolgt kein unkontrolliertes "Umfallen" oder Weiterdrehen des Werkstückes um die Drehachse. Es hat sich herausgestellt, dass es äußerst vorteilhaft ist, dass die Drehachse während des Anhebens eine horizontale Wegstrecke zurücklegt, die mit der horizontal zurückgelegten Wegstrecke während des Absenkens identisch ist. Dadurch kann in optimaler Weise die Länge eines Behandlungsbereichs genutzt werden. Unter Umständen ist es aber auch zweckdienlich, dass die Drehachse während des Anhebens eine kürzere horizontale Wegstrecke zurücklegt als während des Absenkens und umgekehrt. Mit letzterem ist gemeint, dass die Drehachse während des Anhebens eine längere horizontale Wegstrecke zurücklegt als während des Absenkvorgangs.

Es sei hier noch angemerkt, dass die Ein- und Ausdrehvorgänge je nach den Umständen über verschiedene Winkelbereiche durchgeführt werden können. Ist beispielsweise gewünscht, die Werkstücke außerhalb des Behandlungsbereiches horizontal zu transportieren, so erfolgt normalerweise sowohl der Ein- wie auch der Ausdrehvorgang über etwa 180°. Hiervon wäre nur abzuweichen, wenn das Werkstück gegenüber der Horizontalen geneigt im Behandlungsbereich weitertransportiert würde. Für den Fall, dass ein Werkstück außerhalb des Behandlungsbereiches um einen Winkelbetrag, beispielsweise 10°-30°, geneigt transportiert werden soll, was insbesondere bei Fahrzeugkarosserien zum Abtropfen von Behandlungsflüssigkeit vorteilhaft ist, so werden die Ein- und Ausdrehvorgänge über verschiedene Winkelbereiche durchgeführt. Hierzu folgende Beispiele. Eine Karosserie wird um 20° gegenüber der Horizontalen in Bewegungsrichtung geneigt transportiert. Zum vollständigen Eintauchen dieser Karosserie in ein Behandlungsbad erfolgt eine Drehung um ungefähr 160°. Damit ist die Karosserie im Behandlungsbad über Kopf horizontal ausgerichtet. Zum Austauchen erfolgt dann eine Drehung um etwa 180°-200°. Im ersten Fall erfolgt ein Weitertransport der Karosserie ohne Neigung, im zweiten Fall ist sie wieder um 20° gegenüber der Horizontalen geneigt. Prinzipiell das gleiche gilt für eine Neigung um 20° der Karosserie entgegen der Transportrichtung. Allerdings erfolgt dann der Eindrehvorgang über einen Winkelbetrag von ungefähr 200° und der Ausdrehvorgang über einen Winkelbetrag von etwa 160°- 180°. Je nach gewählter Neigung verändern sich natürlich die angegebenen Winkelbeträge.

Wie aus den obigen Beispielen hervorgeht, kann der Ein- oder Ausdrehvorgang auch stufenweise erfolgen. So wäre es insbesondere beim Transport von Fahrzeugkarosserien vorteilhaft, den Ausdrehvorgang zweistufig vorzusehen. Hierbei würde die Fahrzeugkarosserie zuerst nur um etwa 140-160° gedreht werden. Dadurch erfolgt zwar ein Herausdrehen der Fahrzeugkarosserie aus einem Behandlungsbereich, die Karosserie näme aber eine Schrägstellung ein, die ein Abtropfen oder Abfließen von Flüssigkeit erleichtert. Während der Schrägstellung würde die Karosserie weiterhin in horizontaler Richtung zum nächsten Behandlungbereich weitertransportiert. Nach einer vorbestimmten Abtropfzeit würde dann eine weitere Drehung erfolgen, so dass schlußendlich die Karosserie wieder horizontal ausgerichtet wäre. Je nach Bedingungen kann der Eindrehvorgang ebenfalls mehrstufig vorgesehen werden. Selbstverständlich ist bei einer erfindungsgemäßen Vorrichtung die gewünschte Drehlage der Karosserie (bzw. allgemein des Werkstücks) jederzeit festgelegt, d.h. jede beliebige Stellung der Karosserie gegenüber der Horizontalen kann über eine gewünschte Wegstrecke beibehalten werden.

Insbesondere wird, was bereits beim Stand der Technik ebenfalls der Fall war, genutzt, dass die Drehachse eines Halterungsgestells durch eine Antriebseinrichtung kontinuierlich translatorisch bewegt wird und unter Ausnützung dieser translatorischen Bewegung die Drehbewegung der Drehachse herbeigeführt wird. Damit ist für die Herbeiführung der Drehbewegung keine eigene Antriebseinrichtung notwendig. Es ist selbstverständlich aber auch möglich, auf jedem Halterungsgestell eine eigene Dreheinrichtung, beispielsweise ein Elektromotor, einzusetzen.

In einer bevorzugten Ausführungsform wird die Drehbewegung durch ein Hebelsystem herbeigeführt, das mit einer ortsfesten Hebelführung zusammenwirkt. Das Hebelsystem ist am Halterungsgestell angebracht.

Vorteilhafterweise ist in einer erfindungsgemäßen Vorrichtung die Drehachsenhöhenverstellung durch Führungselemente gebildet, in denen die Drehachse eines Halterungsgestells waagrecht ausgerichtet geführt ist. Die Führungselemente verlaufen in einer bevorzugten Ausführungsform längs des Behandlungsbereichs und weisen zumindest im Ein- und Ausgangsbereich eines Behandlungsbereichs, in der Seitenansicht gesehen, jeweils einen ansteigenden Führungselementenabschnitt und einen abfallenden Führungselementenabschnitt auf. Sie sind damit grundsätzlich V-förmig ausgebildet. Der Übergang von einem Schenkel des V's zum anderen ist vorteilhafterweise gerundet ausgeführt, damit beim Richtungswechsel der Drehachse ein sanfter Übergang gewährleistet ist, also ein abrupter Richtungswechsel möglichst vermieden wird. Konstruktiv kann das beispielsweise dadurch gelöst werden, dass die zwei Schenkel des V's durch einen sich jeweils tangential hieran anschmiegenden Teilkreisbogen miteinander verbunden sind. Es ist außerdem noch anzumerken, dass die Schenkel des V's verschieden lang sein können und damit auch verschiedene Steigungen aufweisen können, wie es bereits zuvor unter Heranziehung der jeweils zurückgelegten horizontalen Wegstrecken der Drehachse beschrieben wurde.

Optimalerweise sind die Führungselemente schienenförmig ausgebildet und führen die Endstücke einer Drehachse, so dass die Drehachse translatorisch hierin beweglich und horizontal ausgerichtet bewegbar ist. Eine derartige Ausbildung ist technisch einfach, kostengünstig und außerdem robust.

Wie beim Stand der Technik wird es bevorzugt, die Drehachse eines Halterungsgestells durch die Antriebseinrichtung kontinuierlich translatorisch zu bewegen. Unter Ausnützung dieser translatorischen Bewegung ist zudem die Drehbewegung der Drehachse herbeiführbar. Beispielsweise kann dies durch eine Zahnstangen-Ritzel-Kombination geleistet werden, aber auch durch ein am Halterungsgestell angebrachtes Hebelsystem, das in eine ortsfeste Hebelführung eingreift. Gegenüber der Zahnstangen-Ritzel-Kombination hat das Hebelsystem den Vorteil, dass bei großen und schweren Werkstücken, wie Fahrzeugkarosserien, das erforderliche große Drehmoment durch einfache, längere Hebelarme erzeugt werden kann.

Die Drehbewegung ist insbesondere ständig geführt, wenn als Halterungsgestell mindesten ein seitlich befestigter Hebel vorhanden ist, der mit der Hebelführung zusammenwirkt. Insbesondere sind zwei Hebel mit der Drehachse drehfest verbunden und um einen vorbestimmten Winkelbetrag, beispielsweise 90°, gegeneinander versetzt. Dadurch ist gewährleistet, dass bei einfachster Ausbildung der Hebelführung immer ein Hebel während der Drehbewegung wie auch der translatorischen Bewegung in Eingriff ist. Es ist somit jederzeit ein unkontrolliertes Drehen des Halterungsgestells um die Drehachse vermieden.

Eine sehr einfache Ausführungsform sieht vor, dass Leitflächen auf- und abwärts geneigte Leitabschnitte aufweisen, die als Hebelführung dienen.

Eine erfindungsgemäße Anlage ist dadurch gekennzeichnet, dass mehrere hintereinander angeordnete Behandlungsbereiche vorhanden sind, die jeweils mit einer Vorrichtung gemäß der vorbeschriebenen Erfindung ausgestaltet sind.

### Kurze Beschreibung der Zeichnungen

Im Folgenden sind zur weiteren Erläuterung und zum besseren Verständnis mehrere Ausführungsformen der Erfindung unter Bezugnahme auf die beigefügten Zeichnungen näher beschrieben und erläutert. Es zeigt:
- Fig. 1: eine schematische Seitenansicht einer erfindungsgemäßen Vorrichtung mit anhebbaren Drehachsen und einer Antriebsübertragung auf ein Halterungsgestell über eine Pendelstange gemäß einer ersten Ausführungsform,
- Fig. 2: eine perspektivische Seitenansicht auf eine Vorrichtung gemäß der Fig. 1 und
- Fig. 3: eine schematische Seitenansicht auf eine erfindungsgemäße Vorrichtung mit anhebbaren Drehachsen und einer Antriebsübertragung auf ein Halterungsgestell unmittelbar durch Antriebsketten.

### Beschreibung bevorzugter Ausführungsformen

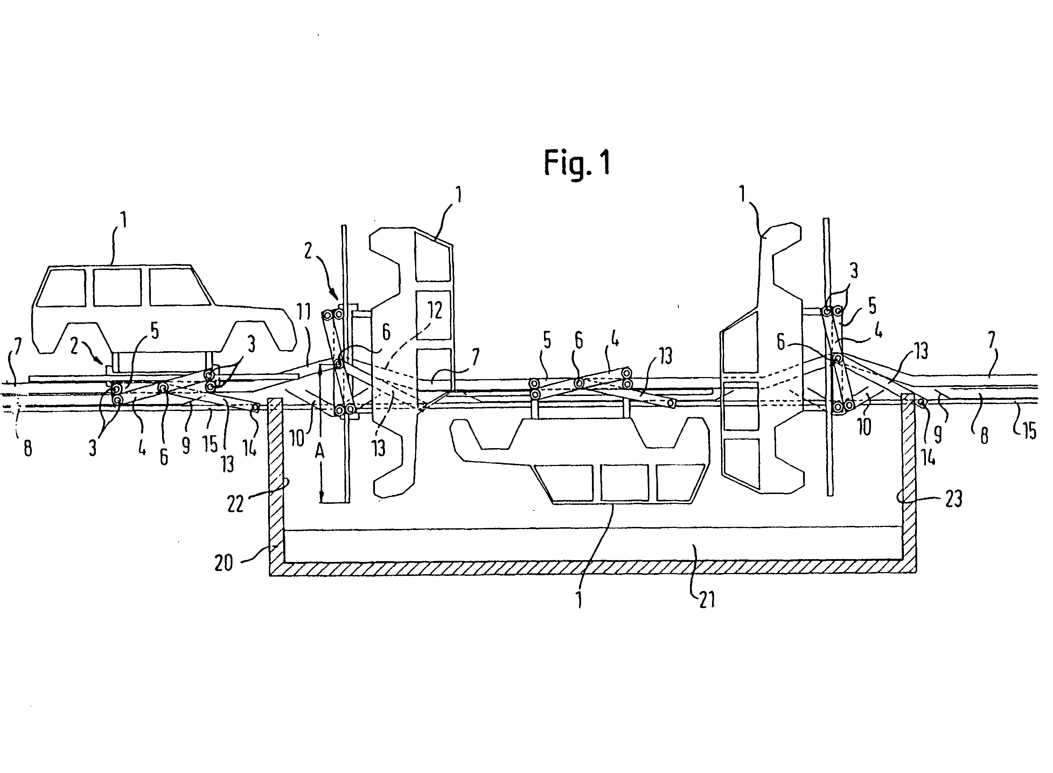

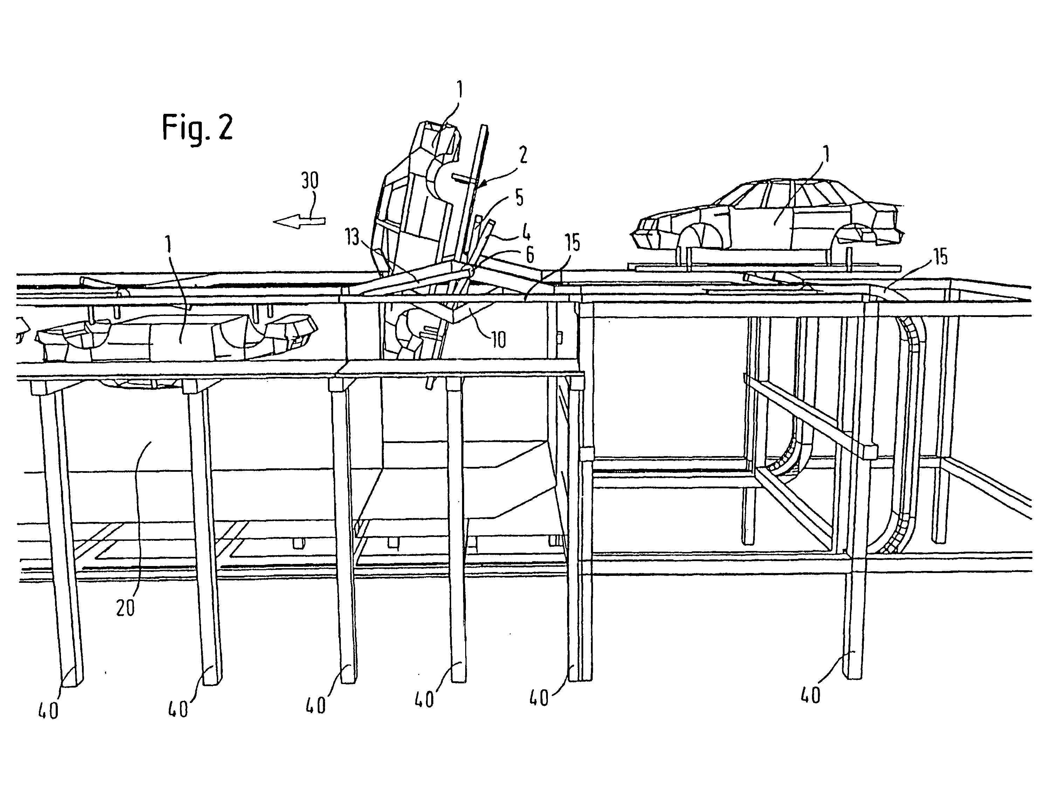

Anhand der Fig. 1 und 2 wird nachfolgend eine erste Ausführungsform der Erfindung näher erläutert. Wie in den Ansichten dieser Fig. 1 und 2 gezeigt, verläuft über einem Behandlungsbad 20 in dessen Längsrichtung eine Drehachsenführung 7. Die Drehachsenführung 7 besteht aus zwei parallel zueinander verlaufenden Schienen, die voneinander beabstandet sind und sich entlang beider Längsseiten des Behandlungsbades erstrecken. In diesen Schienen der Drehachsenführung 7 ist eine Drehachse 6 eines Halterungsgestells 2 für eine Fahrzeugkarosserie 1 translatorisch beweglich gelagert.

Ein Halterungsgestell 2 weist eine hier nicht näher gezeigte Aufnahmeeinrichtung auf, mit der eine Fahrzeugkarosserie lösbar an einem Halterungsgestell 2 befestigbar ist. Die Aufnahmeeinrichtung an sich ist bekannt und kann unterschiedlichst ausgebildet sein, wie beispielsweise als Haken, Klemmeinrichtung etc. Ein Halterungsgestell 2 ist ferner an einer Längsseite mit zwei Hebeln 4, 5 ausgestattet, die um einen gewissen Winkelbetrag zueinander versetzt sind. Beide Hebel 4, 5 sind drehfest mit der Drehachse 6 verbunden. An den Enden der Hebel 4, 5 sind Rollen 5 angebracht, mit denen die Hebel 4 in einer Hebelführung 8 laufen.

Die Hebelführung 8 erstreckt sich bei dieser Ausführungsform unter der Drehachsenführung 7, sie kann aber auch seitlich davon oder oberhalb angeordnet sein. Durch sich gerade erstreckende Abschnitte der Hebelführung 8 wird über die Hebel 4, 5 ein Halterungsgestell 2 waagrecht ausgerichtet mit kontinuierlicher Geschwindigkeit translatorisch in der Drehhebelführung 7 bewegt. Die Hebelführung 8 weist vor einer ersten Stirnwand 22 des Behandlungsbades 20 eine nach oben geneigte Leitfläche 9 auf. Darüber hinaus sind V-förmige Abschnitte 10 der Hebelführung 8 am Anfang und am Ende eines Behandlungsbades 20 vorhanden.

Die Drehachsenführung 7 umfasst ferner auf- und absteigende Führungsabschnitte 11, 12. Durch diese Führungsabschnitte 11, 12 wird die Drehachse 6 eines Halterungsgestells um einen vertikalen Abstand nach oben versetzt. Der höchste Punkt der auf- und absteigenden Führungsabschnitte 11, 12 der Drehachsenführung 7 liegt über dem tiefsten Punkt der V-förmigen Hebelführungsabschnitte 8.

Unterhalb der Hebelführung 8 laufen beabstandet zueinander zwei Endlosantriebsketten in entsprechenden Antriebskettenführungen 15. An den Antriebsketten sind über Pendelstangen 13 und Drehgelenke 14 Drehachsen 6 eines Halterungsgestells 2 drehbar angebracht. Diese Ausführungsform, in der die Kettenführung 15 von der Drehachsenführung 7 getrennt ist, wird gegenüber der später noch beschriebenen Ausführungsform, in der diese zwei Führungen zusammengefaßt sind, bevorzugt, da die Lebensdauer der Endlosketten und der damit in Berührung kommenden Teile länger ist, wenn die Ketten keinen größeren Umlenkungen unterworfen werden, was bei der anderen Ausführungsform der Fall ist. Allerdings hat die Ausführungsform mit zusammengefaßten Führungen den Vorteil, dass sie baulich weniger aufwendig ist.

Im Folgenden wird nun die Betriebsweise einer derartigen Vorrichtung näher beschrieben. Durch Betrieb der Antriebsketten werden die Halterungsgestelle 2 in der Drehachsenführung 7 mit kontinuierlicher Geschwindigkeit translatorisch bewegt. Sobald eine Rolle 5 eines Hebelarms 4 des Halterungsgestells 2 auf die aufsteigende Flanke 9 der Hebelführung 8 aufläuft, wird das Halterungsgestell 2 in Drehung versetzt. Durch die weitere translatorisch Bewegung mittels der Antriebsketten wird diese Drehbewegung mit der translatorischen Bewegung überlagert. Der V-förmige Abschnitt 10 in der Drehhebelführung 8 ist so angeordnet, dass zumindest einer der Hebel 4, 5 mit der zugehörigen Rolle 5 hier einläuft und damit die Drehbewegung kontinuierlich geführt wird. Während dieser kombinierten Drehbewegung und translatorischen Bewegung wird nun die Drehachse 6 und damit das gesamte Halterungsgestell 2 in den ansteigenden Abschnitten 11 der Drehachsenhöhenverstellung angehoben. Dabei wird die Drehbewegung weiter ausgeführt. Der höchste Punkt wird erreicht, wenn der Abstand A, das ist der größere Abstand des Halterungsgestells 2 oder der Fahrzeugkarosserie 1 von der Drehachse 6, unterhalb der Drehachse liegt. Dann wird über den absteigenden Abschnitt 12 der Drehachsenhöhenverstellung das Halterungsgestell 2 wieder abgesenkt, wobei aber über die V-förmige Abschnitte 10 der Hebelführung 8 die Drehbewegung weiter ausgeführt wird. Die Auslenkung der Drehachse 6 bzw. des Halterungsgestells 2 nach oben in der Drehachsenführung 7 wird über die Pendelstange 13 und die gelenkige Ausbildung von der Drehachse 6 und der Antriebskette in der zugehörigen Führung 15 über das Drehgelenk 14 ausgeglichen.

Sobald die Karosserie 1 vollständig in dem Behandlungsbad 20 eingetaucht ist, endet die Drehbewegung und die Hebel 4, 5 verlaufen wieder in der geraden Drehhebelführung 8. Der Ausdrehvorgang am Ende des Behandlungsbades 20 verläuft wie der Einbringvorgang, wiederum wird die Drehachse unter gleichzeitiger Drehung angehoben und schließlich wieder abgesenkt. Die Drehung erfolgt in der gleichen Drehrichtung wie beim Eindrehvorgang.

In der Fig. 1 ist ersichtlich, dass ein Tiefenbereich 21 durch die Drehachsenhöhenverstellung 11, 12 eingespart wird. Der tatsächlich notwendige Tiefenbereich des Behandlungsbades 20 ist somit um die Höhe des Bereichs 21 kleiner als beim Stand der Technik. Über die vertikale Höhenänderung der Drehachse 2 mittels der Drehachsenhöhenverstellung 11, 12 ist somit auch der einzusparende Tiefenbereich 21 steuerbar. In der Fig. 2 ist insbesondere die umlaufende Führung der Antriebskette 15 und der Drehachsenführungen 7 ersichtlich. Hieraus ist auch erkennbar, dass die gesamte Anlage auf Stützen 40 ruht, zwischen denen die einzelnen Behandlungbäder 20 angeordnet sind. Die translatorische Bewegungsrichtung der Fahrzeugkärosserien ist hier mit dem Bezugszeichen 30 gekennzeichnet.

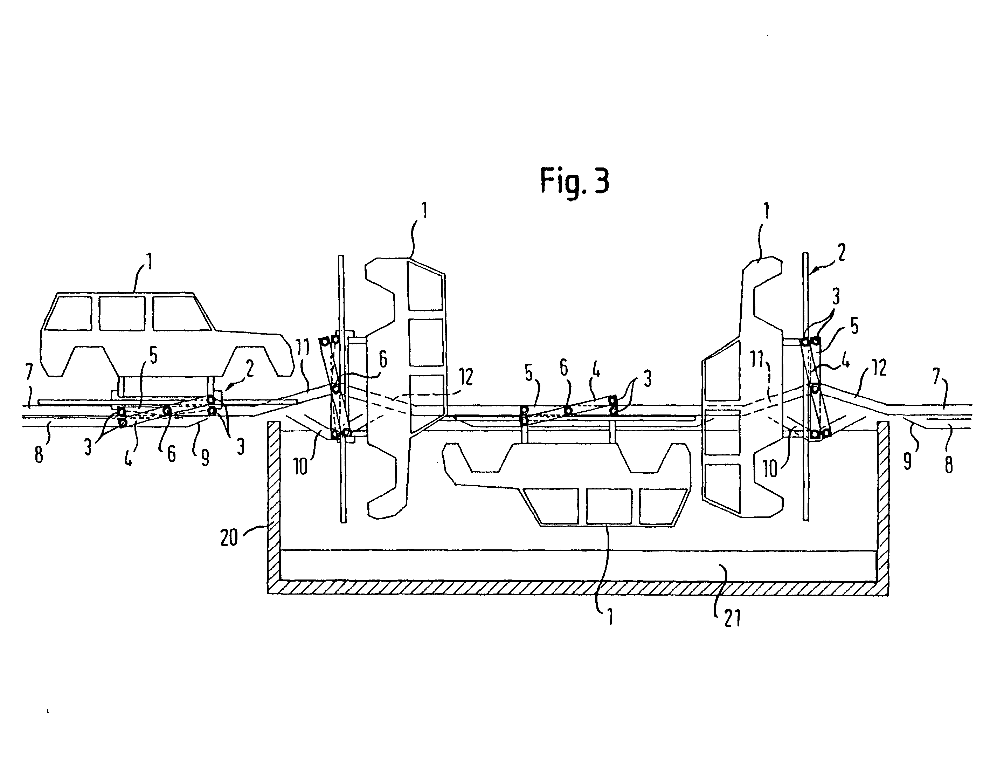

Eine zweite Ausführungsform der erfindungsgemäßen Vorrichtung ist aus der schematischen Seitenansicht der Fig. 3 ersichtlich. Diese Ausführungsform entspricht in großen Teilen der ersten Ausführungsform gemäß den Fig. 1 und 2. Es ist aber hier keine eigene Antriebskettenführung 15 vorhanden, sondern die Antriebskette ist in der Drehachsenführung 7 integriert. Damit werden die Pendelstangen 13 eingespart. Bei dieser Ausführung sind somit die Halterungsgestelle 2 mit den Drehachsen 6 unmittelbar an hier nicht dargestellten Antriebsketten in der Drehachsenführung 7 drehbar befestigt.

Diese zweite Ausführungsform der Erfindung funktioniert ansonsten in der gleichen Weise wie die erste Asuführungsform, so dass zur Vermeidung unnötiger Wiederholungen diesbezüglich auf die vorherige Beschreibung verwiesen wird.

## Patentansprüche

1. Verfahren zum Ein- und Ausbringen von Werkstücken, insbesondere Fahrzeugkarosserien, in bzw. aus einem zur Oberflächenbehandlung der Werkstücke (1) dienenden Behandlungsbereich (20) durch einen Ein- bzw. einen Ausdrehvorgang, bei dem
- zumindest ein Werkstück (1 auf einem Halterungsgestell (2) lösbar befestigt wird,
- das Halterungsgestell (2) mit dem zumindest einen darauf befindlichen Werkstück (1) mit im wesentlicher konstanter Geschwindigkeit kontinuierlich translatorisch bewegt wird,
- zumindest am Anfang- und am Ende des Behandlungsbereiches (20) das Werkstück (1) während der translatorischen Bewegung gleichzeitig um eine zur Bewegungsrichtung des Halterungsgestells (2) senkrecht ausgerichtete Drehachse (6) gedreht wird,
**dadurch gekennzeichnet, dass**
die Drehachse (6) während des Drehens angehoben und abgesenkt wird.

2. Verfahren nach Anspruch 1, **dadurch gekennzeichnet, dass** die Drehachse (6) solange angehoben wird, bis derjenige Punkt der Werkstück-Halterungsgestell-Kombination (1, 2), der den größten Abstand (A) zur Drehachse (6) aufweist, im wesentlichen senkrecht unter der Drehachse (6) liegt.

3. Verfahren nach Anspruch 1 oder 2, **dadurch gekennzeichnet, dass** beim Einbringen des Werkstücks (1) in den Behandlungsbereich (20) die Drehgeschwindigkeit und die translatorische Bewegungsgeschwindigkeit so aufeinander abgestimmt werden, dass das Vorderteil des Werkstücks (1) nach Beendigung des Drehvorgangs unter Beachtung eines vorbestimmten Sicherheitsabstands zu einer ersten Stirnwand (22) des Behandlungsbereiches (20) positioniert wird.

4. Verfahren nach Anspruch 1, **dadurch gekennzeichnet, dass** der Ausdrehvorgang zum Ausbringen des Werkstücks (1) aus dem Behandlungsbereich (20) begonnen wird, wenn das Vorderteil des Werkstücks (1) einen vorbestimmten Sicherheitsabstand zu einer zweiten Stirnwand (23) des Behandlungsbereiches (20) erreicht, und beim Ausdrehvorgang die Drehgeschwindigkeit und die translatorische Bewegungsgeschwindigkeit so aufeinander abgestimmt werden, dass bei Beendigung des Drehvorgangs das Werkstück wieder horizontal ausgerichtet ist.

5. Verfahren nach Anspruch 1 oder 2, **dadurch gekennzeichnet, dass** der Drehvorgang jederzeit kontrolliert geführt verläuft.

6. Verfahren nach Anspruch 1 oder 2, **dadurch gekennzeichnet, dass** die Drehachse (6) während des Anhebens eine horizontale Wegstrecke zurückgelegt, die mit der horizontal zurückgelegten Wegstrecke während des Absenkens identisch ist.

7. Verfahren nach Anspruch 1 oder 2, **dadurch gekennzeichnet, dass** die Drehachse (6) während des Anhebens eine kürzere horizontale Wegstrecke zurückgelegt als während des Absenkens.

8. Verfahren nach Anspruch 1 oder 2, **dadurch gekennzeichnet, dass** die Drehachse (6) während des Anhebens eine längere horizontale Wegstrecke zurückgelegt als während deren Absenkvorgangs.

9. Verfahren nach einem der Ansprüche 1, 6, 7 oder 8, **dadurch gekennzeichnet, dass** das Anheben und Absenken der Drehachse (6) durch auf- und absteigende Führungselemente (11, 12) vorgegeben wird, in denen die Drehachse (6) eines Halterungsgestells (2) geführt wird.

10. Verfahren nach Anspruch 1, **dadurch gekennzeichnet, dass** die Drehachse (6) eines Halterungsgestells (6) durch eine Antriebseinrichtung kontinuierlich translatorisch bewegt wird und unter Ausnutzung dieser translatorischen Bewegung die Drehbewegung der Drehachse (6) herbeigeführt wird.

11. Verfahren nach Anspruch 10, **dadurch gekennzeichnet, dass** die Drehbewegung der Drehachse (6) über ein am Halterungsgestell (2) angebrachtes und in einer ortsfesten Hebelführung (8, 9, 10) geführtes Hebelsystem (4, 5) herbeigeführt wird.

12. Vorrichtung zur Oberflächenbehandlung von Werkstücken (1) in einem oder mehreren Behandlungsbereichen (20), insbesondere zur Oberflächenbehandlung von Fahrzeugkarosserien in Behandlungsbädern oder Behandlungskabinen, mit
- zumindest einem Halterungsgestell (2) zur Aufnahme eines oder mehrerer Werkstücke (1), das
- eine Aufnahmeeinrichtung umfaßt, mit der das Werkstück (1) am Halterungsgestell (2) lösbar anbringbar ist, und
- eine Drehachse (6) aufweist, um die das Halterungsgestell (2) drehbar ist,
- einer Halterungsgestell-Führungseinrichtung (7), die sich längs eines oder mehrerer Behandlungbereiche (20) erstreckt und in der die Halterungsgestelle (2) geführt bewegbar sind,
- einer Dreheinrichtung (8, 9, 10) zum-Indrehungversetzen des Halterungsgestells (2) um dessen Drehachse (6),
- einem Antriebsmittel, mit dem das Halterungsgestell (6) kontinuierlich translatorisch in der Halterungsgestell-Führungseinrichtung (7) bewegbar ist,
**dadurch gekennzeichnet, dass**
- zumindest im Ein- und Ausgangsbereich des Behandlungsbereiches (20) jeweils eine Drehachsenhöhenverstellung (11, 12) vorhanden ist, mit der die Drehachse (6) eines Halterungsgestells (2) anhebbar und absenkbar ist, und
- die Dreheinrichtung (8, 9, 10) in dem Bereich der Drehachsenhöhenverstellung (11, 12) aktivierbar ist.

13. Vorrichtung nach Anspruch 12, **dadurch gekennzeichnet, dass** die Drehachsenhöhenverstellung (11, 12 ) zum Anheben und Absenken der Drehachse (6) eines Halterungsgestells (2) so ausgebildet ist, dass die Drehachse (6) ihren höchsten Punkt erreicht, wenn derjenige Punkt der Werkstück-Halterungsgestell-Kombination (1, 2), der den größten Abstand (A) zur Drehachse (6) aufweist, im wesentlichen senkrecht unter der Drehachse (6) liegt.

14. Vorrichtung nach Anspruch 12 oder 13, **dadurch gekennzeichnet, dass** die Dreheinrichtung (8, 9, 10) und die Antriebseinrichtung (15) derart ausgebildet sind, dass beim Einbringen des Werkstücks (1) in den Behandlungsbereich (20) die Drehgeschwindigkeit und die translatorische Bewegungsgeschwindigkeit so aufeinander abgestimmt sind, dass das Vorderteil des Werkstücks (1) nach Beendigung des Drehvorgangs unter Beachtung eines Sicherheitsabstands zu einer ersten Stirnwand (22) des Behandlungsbereiches (20) positioniert ist.

15. Vorrichtung nach Anspruch 14, **dadurch gekennzeichnet, dass**
- die Dreheinrichtung (9, 10) dann aktivierbar ist und mit dem Ausdrehen des Werkstücks (1) aus dem Behandlungsbereich (20) begonnen wird, wenn das Vorderteil des Werkstücks (1) einen vorbestimmten Sicherheitsabstand zu einer zweiten Stirnwand (23) des Behandlungsbereiches (20) erreicht, und
- die Dreheinrichtung (9, 10) derart ausgebildet ist, dass deren Drehgeschwindigkeit mit der durch die Antriebseinrichtung (15) vorgegebenen translatorischen Bewegungsgeschwindigkeit so abgestimmt ist, dass bei Beendigung des Drehvorgangs das Werkstück (1) wieder horizontal ausgerichtet ist.

16. Vorrichtung nach einem der Ansprüche 12-15, **dadurch gekennzeichnet, dass** die Drehachsenhöhenverstellung (11, 12) so ausgebildet ist, dass die Drehachse (6) während des Anhebens eine horizontale Wegstrecke zurücklegt, die mit der horizontal zurückgelegten Wegstrecke während des Absenkens identisch ist.

17. Vorrichtung nach einem der Ansprüche 12-15, **dadurch gekennzeichnet, dass** die Drehachsenhöhenverstellung (11, 12) so ausgebildet ist, dass die Drehachse (6) während des Anhebens eine kürzere horizontale Wegstrecke zurückgelegt als während des Absenkens.

18. Vorrichtung nach einem der Ansprüche 12-15, **dadurch gekennzeichnet, dass** die Drehachsenhöhenverstellung (11, 12) so ausgebildet ist, dass die Drehachse (6) während des Anhebens eine längere horizontale Wegstrecke zurückgelegt als während deren Absenkvorgangs.

19. Vorrichtung nach einem der Ansprüche 12-18, **dadurch gekennzeichnet, dass** die Drehachsenhöhenverstellung durch Führungselemente (7, 11, 12) gebildet ist, in denen die Drehachse (6) eines Halterungsgestells (2) waagrecht ausgerichtet geführt ist.

20. Vorrichtung nach Anspruch 19, **dadurch gekennzeichnet, dass** die Führungselemente (7, 11, 12) längs der Behandlungsbereiche (20) verlaufen und im Einund Ausgangsbereich eines Behandlungsbereiches (20), in der Seitenansicht gesehen , jeweils einen ansteigenden Führungselementenabschnitt (11) und einen abfallenden Führungselementenabschnitt (12) aufweisen.

21. Vorrichtung nach Anspruch 19 oder 20, **dadurch gekennzeichnet, dass** die Führungselemente längs der Behandlungsbereiche (20) verlaufen und als Schienen (11, 12) ausgebildet sind, in denen die Endstücke einer Drehachse (6) translatorisch beweglich geführt sind.

22. Vorrichtung nach Anspruch 12, **dadurch gekennzeichnet, dass** die Drehachse (6) eines Halterungsgestells (2) durch die Antriebseinrichtung (15) kontinuierlich translatorisch bewegbar ist und unter Ausnutzung dieser translatorischen Bewegung die Drehbewegung der Drehachse (6) herbeiführbar ist.

23. Vorrichtung nach Anspruch 12 oder 22, **dadurch gekennzeichnet, dass** ein am Halterungestell angebrachtes und in einer ortsfesten Hebelführung (8, 9, 10) geführtes Hebelsystem (4, 5) vorhanden ist, mit dem die Drehbewegung herbeiführbar ist.

24. Vorrichtung nach Anspruch 12 oder 23, **dadurch gekennzeichnet, dass** das Halterungsgestell (2) mindestens einen seitlich befestigten Hebel (4, 5) aufweist, der mit einer Hebelführung (8, 9, 10) zusammenwirkt, um die Drehung des Halterungsgestells (2) zu bewirken.

25. Vorrichtung nach Anspruch 12 oder 24, **dadurch gekennzeichnet, dass** zwei Hebel (4, 5) mit der Drehachse (6) drehfest verbunden sind und um einen vorbestimmten Winkelbetrag gegeneinander versetzt sind.

26. Vorrichtung nach einem der Ansprüche 12, 23, 24 oder 25, **dadurch gekennzeichnet, dass** auf jeder Seite des Halterungsgestells zwei Hebel angeordnet sind, wobei die Hebel auf jeweils einer Seite des Halterungsgestells (2) angeordnet sind.

27. Vorrichtung nach einem der Ansprüche 22-26, **dadurch gekennzeichnet, dass** die Hebelführung (8) im Ein- bzw. Ausgangsbereich eines Behandlungsbereiches (20) zum Indrehungversetzen des Halterungsgestells (2) geeignete Leitflächen (9, 10)aufweist.

28. Vorrichtung nach Anspruch 27, **dadurch gekennzeichnet, dass** die Leitflächen auf- und abwärts geneigte Leitabschnitte (10) aufweisen.

29. Anlage zur Oberflächenbehandlung von Werkstücken, insbesondere Fahrzeugkaros serien, mit
- mehreren hintereinander angeordneten Behandlungsbereichen (20),
- einer Vorrichtung nach einem oder mehreren der Ansprüche 12- 28 mit mehreren Halterungsgestellen (2), die beabstandet voneinander entlang der Behandlungsbereiche (20) kontinuierlich translatorisch bewegbar sind,
- einer Zuführeinrichtung, mit dem die Werkstücke in Übereinstimmung mit der Bewegungsgeschwindigkeit der Halterungsgestelle (2) einzeln zuführbar sind und
- einer Abnahmeeinrichtung, mit der bei kontinuierlicher Bewegung der Halterungsgestelle (2) in einem Ausgangsbereich der Anlage die nunmehr behandelten Werkstücke (1) von den Halterungsgestellen (2) abnehmbar und wegtransportierbar sind.

30. Anlage nach Anspruch 28, **dadurch gekennzeichnet, dass** die Halterungsgestelle oberhalb, unterhalb oder seitlich der Behandlungsbereiche (20) vom Ausgangsbereich zum Eingangsbereich der Anlage zurückführbar sind.

31. Anlage nach Anspruch 29 oder 30, **dadurch gekennzeichnet, dass** die Drehachsenführung (8) ober- und unterhalb der Behandlungbereiche (20) angeordnet sind und im Ein- und Ausgangsbereich der Anlage durch Umlenkeinrichtungen endlos umlaufend ausgestaltet sind.

## Claims

1. Method for introducing work pieces, in particular vehicle bodies, into and discharging them from a treatment zone (20) which serves for surface treatment of the work pieces (1), by an operation of turning in and out, in which
- at least one work piece (1) is releasably attached to a supporting frame (2),
- the supporting frame (2) with the at least one work piece (1) located thereon is moved continuously translationally at an essentially constant speed,
- at least at the beginning and end of the treatment zone (20) the work piece (1) during the translational movement is simultaneously turned about a rotary shaft (6) oriented perpendicularly to the direction of movement of the supporting frame (2),
**characterised in that** during turning the rotary shaft (6) is lifted and lowered.

2. Method according to claim 1, **characterised in that** the rotary shaft (6) is lifted until the point of the work piece/supporting frame combination (1, 2) which is the greatest distance (A) from the rotary shaft (6) is located essentially vertically under the rotary shaft (6).

3. Method according to claim 1 or 2, **characterised in that** during introduction of the work piece (1) into the treatment zone (20) the speed of rotation and the speed of translational movement are coordinated with each other in such a way that at the end of the turning operation the front part of the work piece (1) is positioned, observing a predetermined safety distance from a first end wall (22) of the treatment zone (20).

4. Method according to claim 1, **characterised in that** the turning-out operation for taking the work piece (1) out of the treatment zone (20) is begun when the front part of the work piece (1) reaches a predetermined safety distance from a second end wall (23) of the treatment zone (20), and during the turning-out operation the speed of rotation and the speed of translational movement are coordinated with each other in such a way that at the end of the turning operation the work piece is again oriented horizontally.

5. Method according to claim 1 or 2, **characterised in that** the turning operation is guided in a controlled fashion at any time.

6. Method according to claim 1 or 2, **characterised in that** during lifting the rotary shaft (6) covers a horizontal distance which is identical with the horizontally covered distance during lowering.

7. Method according to claim 1 or 2, **characterised in that** during lifting the rotary shaft (6) covers a shorter horizontal distance than during lowering.

8. Method according to claim 1 or 2, **characterised in that** during lifting the rotary shaft (6) covers a longer horizontal distance than during its lowering operation.

9. Method according to any of claims 1, 6, 7 or 8, **characterised in that** lifting and lowering of the rotary shaft (6) are predetermined by ascending and descending guide elements (11, 12) in which the rotary shaft (6) of a supporting frame (2) is guided.

10. Method according to claim 1, **characterised in that** the rotary shaft (6) of a supporting frame (6) is continuously moved translationally by a drive device and, using this translational movement, the rotational movement of the rotary shaft (6) is brought about.

11. Method according to claim 10, **characterised in that** the rotational movement of the rotary shaft (6) is brought about via a lever system (4, 5) mounted on the supporting frame (2) and guided in a stationary lever guide (8, 9, 10).

12. Apparatus for the surface treatment of work pieces (1) in one or more treatment zones (20), in particular for the surface treatment of vehicle bodies in treatment baths or treatment cubicles, with
- at least one supporting frame (2) for receiving one or more work pieces (1), which
- includes a receiving device with which the work piece (1) can be mounted releasably on the supporting frame (2), and
- comprises a rotary shaft (6) about which the supporting frame (2) is rotatable,
- a supporting frame guide device (7) which extends along one or more treatment zones (20) and in which the supporting frames (2) are movable in guided fashion,
- a turning device (8, 9, 10) for setting the supporting frame (2) in rotation about its rotary shaft (6),
- a drive means with which the supporting frame (6) is continuously movable translationally in the supporting frame guide device (7),
**characterised in that**
- at least in the input and output zones of the treatment zone (20) there is in each case a rotary shaft height adjusting means (11, 12) with which the rotary shaft (6) of a supporting frame (2) can be lifted and lowered, and
- the turning device (8, 9, 10) can be activated in the region of the rotary shaft height adjusting means (11, 12).

13. Apparatus according to claim 12, **characterised in that** the rotary shaft height adjusting means (11, 12) is designed for lifting and lowering the rotary shaft (6) of a supporting frame (2), such that the rotary shaft (6) reaches its highest point when the point of the work piece/supporting frame combination (1, 2) which is the greatest distance (A) from the rotary shaft (6) is located essentially vertically below the rotary shaft (6).

14. Apparatus according to claim 12 or 13, **characterised in that** the turning device (8, 9, 10) and the drive device (15) are designed in such a way that during introduction of the work piece (1) into the treatment zone (20) the speed of rotation and the speed of translational movement are coordinated with each other in such a way that at the end of the turning operation the front part of the work piece (1) is positioned, observing a safety distance from a first end wall (22) of the treatment zone (20).

15. Apparatus according to claim 14, **characterised in that**
- the turning device (9, 10) can be activated and turning-out of the work piece (1) out of the treatment zone (20) is begun when the front part of the work piece (1) reaches a predetermined safety distance from a second end wall (23) of the treatment zone (20), and
- the turning device (9, 10) is designed in such a way that its speed of rotation is coordinated with the speed of translational movement predetermined by the drive device (15), in such a way that at the end of the turning operation the work piece (1) is again oriented horizontally.

16. Apparatus according to any of claims 12-15, **characterised in that** the rotary shaft height adjusting means (11, 12) is designed in such a way that during lifting the rotary shaft (6) covers a horizontal distance which is identical with the horizontally covered distance during lowering.

17. Apparatus according to any of claims 12-15, **characterised in that** the rotary shaft height adjusting means (11, 12) is designed in such a way that during lifting the rotary shaft (6) covers a shorter horizontal distance than during lowering.

18. Apparatus according to any of claims 12-15, **characterised in that** the rotary shaft height adjusting means (11, 12) is designed in such a way that during lifting the rotary shaft (6) covers a longer horizontal distance than during its lowering operation.

19. Apparatus according to any of claims 12-18, **characterised in that** the rotary shaft height adjusting means is formed by guide elements (7, 11, 12) in which the rotary shaft (6) of a supporting frame (2) is guided, oriented horizontally.

20. Apparatus according to claim 19, **characterised in that** the guide elements (7, 11, 12) run along the treatment zones (20) and in the input and output zones of a treatment zone (20), seen in a side view, comprise in each case an ascending guide element section (11) and a descending guide element section (12).

21. Apparatus according to claim 19 or 20, **characterised in that** the guide elements run along the treatment zones (20) and are designed as rails (11, 12) in which the end sections of a rotary shaft (6) are guided for translational movement.

22. Apparatus according to claim 12, **characterised in that** the rotary shaft (6) of a supporting frame (2) is continuously movable translationally by the drive device (15) and, using this translational movement, the rotational movement of the rotary shaft (6) can be brought about.

23. Apparatus according to claim 12 or 22, **characterised in that** there is a lever system (4, 5) which is mounted on the supporting frame and guided in a stationary lever guide (8, 9, 10) and with which the rotational movement can be brought about.

24. Apparatus according to claim 12 or 23, **characterised in that** the supporting frame (2) comprises at least one laterally fixed lever (4, 5) which cooperates with a lever guide (8, 9, 10) for causing rotation of the supporting frame (2).

25. Apparatus according to claim 12 or 24, **characterised in that** two levers (4, 5) are non-rotatably connected to the rotary shaft (6) and offset from each other by a predetermined angular amount.

26. Apparatus according to any of claims 12, 23, 24 or 25, **characterised in that** on each side of the supporting frame are arranged two levers, wherein the levers are arranged each on one side of the supporting frame (2).

27. Apparatus according to any of claims 22-26, **characterised in that** the lever guide (8) in the input or output zone of a treatment zone (20) comprises guide surfaces (9, 10) suitable for setting the supporting frame (2) in rotation.

28. Apparatus according to claim 27, **characterised in that** the guide surfaces comprise upwardly and downwardly inclined guide sections (10).

29. Plant for the surface treatment of work pieces, in particular vehicle bodies, with
- several treatment zones (20) arranged one behind the other,
- an apparatus according to one or more of claims 12-28 with several supporting frames (2) which are continuously movable translationally along the treatment zones (20) at a distance from each other,
- a delivery device with which the work pieces can be delivered individually in accordance with the speed of movement of the supporting frames (2) and
- a take-off device with which during continuous movement of the supporting frames (2) in an output zone of the plant the now treated work pieces (1) can be taken off the supporting frames (2) and transported away.

30. Plant according to claim 28, **characterised in that** the supporting frames can be returned from the output zone to the input zone of the plant above, below or laterally of the treatment zones (20).

31. Plant according to claim 29 or 30, **characterised in that** the rotary shaft guides (8) are arranged above and below the treatment zones (20) and are designed to revolve endlessly by guide devices in the input and output zones of the plant.

## Revendications

1. Procédé pour introduire et retirer des pièces à usiner, en particulier des carrosseries de véhicule, dans et/ou hors d'une zone de traitement (20) servant au traitement de surface des pièces à usiner (1) par une action de pivotement et de retournement, dans lequel
- au moins une pièce à usiner (1) est fixée de façon relâchable sur un bâti de support (2),
- le bâti de support (2) avec la au moins une pièce à usiner (1) se trouvant dessus est mû en translation continue à une vitesse sensiblement constante,
- au moins au début et à la fin de la zone de traitement (20), la pièce à usiner (1) est, pendant le déplacement en translation, pivotée en même temps autour d'un axe (6) orienté perpendiculairement au sens de déplacement du bâti de support (2),
**caractérisé en ce que**
l'axe de rotation (6) est élevé et abaissé pendant le pivotement.

2. Procédé selon la revendication 1, **caractérisé en ce que** l'axe de rotation (6) est élevé pendant aussi longtemps que nécessaire jusqu'à ce que le point de la combinaison pièce à usiner et bâti de support (1, 2), qui présente la distance (A) la plus grande par rapport à l'axe de rotation (6), se trouve sensiblement perpendiculaire sous l'axe de rotation (6).

3. Procédé selon la revendication 1 ou 2, **caractérisé en ce que**, lors de l'introduction de la pièce à usiner (1) dans la zone de traitement (20), la vitesse de rotation et la vitesse de déplacement translatoire sont ajustées l'une par rapport à l'autre de telle sorte que, après la fin de la rotation, la partie avant de la pièce à usiner (1) se trouve positionnée en respectant une distance de sécurité prédéterminée par rapport à une première paroi frontale (22) de la zone de traitement (20).

4. Procédé selon la revendication 1, **caractérisé en ce que** l'action de retournement pour retirer la pièce usinée (1) hors de la zone de traitement (20) est commencée lorsque la partie avant de la pièce à usiner (1) atteint une distance de sécurité prédéterminée par rapport à une seconde paroi frontale (23) de la zone de traitement (20), et **en ce que**, lors de l'action de retournement, la vitesse de rotation et la vitesse de déplacement en translation sont ajustées l'une par rapport à l'autre de telle sorte que, à la fin de l'action de retournement, la pièce usinée soit de nouveau orientée horizontalement.

5. Procédé selon la revendication 1 ou 2, **caractérisé en ce que** l'action de pivotement se déroule selon un guidage contrôlé à chaque instant.

6. Procédé selon la revendication 1 ou 2, **caractérisé en ce que** l'axe de rotation (6) parcourt pendant l'élévation un trajet horizontal qui est identique au trajet horizontal parcouru pendant l'abaissement.

7. Procédé selon la revendication 1 ou 2, **caractérisé en ce que** l'axe de rotation (6) parcourt pendant l'élévation un trajet horizontal plus court que celui parcouru pendant l'abaissement.

8. Procédé selon la revendication 1 ou 2, **caractérisé en ce que** l'axe de rotation (6) parcourt pendant l'élévation un trajet horizontal plus long que celui parcouru pendant l'action d'abaissement.

9. Procédé selon l'une quelconque des revendications 1, 6, 7 ou 8, **caractérisé en ce que** l'élévation et l'abaissement de l'axe de rotation (6) sont prédéterminés par des éléments de guidage ascendant et descendant (11, 12) dans lesquels l'axe de rotation (6) d'un bâti de support (2) est guidé.

10. Procédé selon la revendication 1, **caractérisé en ce que** l'axe de rotation (6) d'un bâti de support (2) est mû en translation continue par un dispositif d'entraînement et **en ce que** le mouvement en rotation de l'axe de rotation (6) est embrayé en utilisant ce mouvement en translation.

11. Procédé selon la revendication 10, **caractérisé en ce que** le mouvement en rotation de l'axe de rotation (6) est embrayé au moyen d'un système de levier (4, 5) aménagé avec le bâti de support (2) et guidé dans un guidage de levier (8, 9, 10) stationnaire.

12. Appareil de traitement de surface de pièces à usiner (1) dans une ou plusieurs zones de traitement (20), en particulier, pour le traitement de surface de carrosseries de véhicule dans des cuves de traitement ou des cabines de traitement, comportant
- au moins un bâti de support (2) pour réception d'une ou de plusieurs pièces à usiner (1), lequel
- comprend un dispositif de réception, avec lequel la pièce à usiner (1) est montée de façon relâchable sur le bâti de support (2), et
- présente un axe de rotation (6), autour duquel le bâti de support (2) peut pivoter,
- un dispositif de guidage du bâti de support (7), qui s'étend le long d'une ou de plusieurs zones de traitement (20) et dans lequel les bâtis de support (2) peuvent être déplacés de façon guidée,
- un dispositif de pivotement (8, 9, 10) pour le pivotement du bâti de support (2) autour de son axe de rotation (6),
- un moyen d'entraînement, avec lequel le bâti de support (2) peut être déplacé en translation continue dans le dispositif de guidage du bâti de support (7),
**caractérisé en ce que**
- au moins dans la région d'entrée et de sortie de la zone de traitement (20) respectivement il existe un positionnement en hauteur de l'axe de rotation (11, 12), avec lequel l'axe de rotation (6) d'un bâti de support (2) peut être élevé ou abaissé, et
- le dispositif de pivotement (8, 9, 10) peut être activé dans la région de positionnement en hauteur de l'axe de rotation (11, 12).

13. Appareil selon la revendication 12, **caractérisé en ce que** le positionnement en hauteur de l'axe de rotation (11, 12) est conçu pour élever et abaisser l'axe de rotation (6) d'un bâti de support (2) de telle sorte que l'axe de rotation (6) atteigne son point culminant lorsque le point de la combinaison pièce à usiner et bâti de support (1, 2), qui présente la plus grande distance (A) par rapport à l'axe de rotation (6), se trouve sensiblement perpendiculaire sous l'axe de rotation (6).

14. Appareil selon la revendication 12 ou 13, **caractérisé en ce que** le dispositif de pivotement (8, 9, 10) et le dispositif d'entraînement (15) sont conçus de telle sorte que, lors de l'introduction de la pièce à usiner (1) dans la zone de traitement (20), la vitesse de rotation et la vitesse de déplacement en translation soient ajustées l'une par rapport à l'autre de manière telle que, à la fin du pivotement, la partie avant de la pièce à usiner (1) soit positionnée en respectant une distance de sécurité prédéterminée par rapport à une première paroi frontale (22) de la zone de traitement (20).

15. Appareil selon la revendication 14, **caractérisé en ce que**
- le mouvement de pivotement (9, 10) peut alors être activé et être commencé avec le retournement de la pièce à usiner (1) hors de la zone de traitement (20) lorsque la partie avant de la pièce à usiner (1) atteint une distance de sécurité prédéterminée par rapport à une seconde paroi frontale (23) de la zone de traitement (20), et
- le dispositif de pivotement (9, 10) est conçu de telle sorte que la vitesse de rotation soit ajustée par rapport à la vitesse de déplacement en translation prédéterminée par le dispositif d'entraînement (15) de manière que, après l'action de pivotement, la pièce à usiner (1) soit de nouveau orientée horizontalement.

16. Appareil selon l'une quelconque des revendications 12 à 15, **caractérisé en ce que** le positionnement en hauteur de l'axe de rotation (11, 12) est conçu de sorte que l'axe de rotation (6) parcoure pendant l'élévation un trajet horizontal qui soit identique au trajet horizontal parcouru pendant l'abaissement.

17. Appareil selon l'une quelconque des revendications 12 à 15, **caractérisé en ce que** le positionnement en hauteur de l'axe de rotation (11, 12) est conçu de sorte que l'axe de rotation (6) parcoure pendant l'élévation un trajet horizontal plus court que celui parcouru pendant l'abaissement.

18. Appareil selon l'une quelconque des revendications 12 à 15, **caractérisé en ce que** le positionnement en hauteur de l'axe de rotation (11, 12) est conçu de sorte que l'axe de rotation (6) parcoure pendant l'élévation un trajet horizontal plus long que celui parcouru pendant l'action d'abaissement.

19. Appareil selon l'une quelconque des revendications 12 à 18, **caractérisé en ce que** le positionnement en hauteur de l'axe de rotation est formé par des éléments de guidage (7, 11, 12), dans lesquels l'axe de rotation (6) d'un bâti de support (2) est guidé dans une orientation horizontale.

20. Appareil selon la revendication 19, **caractérisé en ce que** les éléments de guidage (7, 11, 12) s'étendent le long des zones de traitement (20) et présentent, lorsque considérés en vue latérale, respectivement une section d'élément de guidage ascendante (11) et une section d'élément de guidage (12) descendante dans la région d'entrée et de sortie d'une zone de traitement (20).

21. Appareil selon la revendication 19 ou 20, **caractérisé en ce que** les éléments de guidage s'étendent le long des zones de traitement (20) et sont conçus comme des rails (11, 12), dans lesquels les organes terminaux d'un axe de rotation (6) sont guidés dans un déplacement en translation.

22. Appareil selon la revendication 12, **caractérisé en ce que** l'axe de rotation (6) d'un bâti de support (2) peut être déplacé en translation continue par un dispositif d'entraînement (15), et **en ce que** le mouvement en rotation de l'axe de rotation (6) peut être embrayé en utilisant ce mouvement de translation.

23. Appareil selon la revendication 12 ou 22, **caractérisé en ce qu'**il existe un système de levier (4, 5) aménagé avec le bâti de support et guidé dans un guidage de levier stationnaire (8, 9, 10), au moyen duquel le mouvement en rotation peut être embrayé.

24. Appareil selon la revendication 12 ou 23, **caractérisé en ce que** le bâti de support (2) présente au moins un levier (4, 5) fixé latéralement, qui coopère avec un guidage de levier (8, 9, 10) afin d'actionner le pivotement du bâti de support (2).

25. Appareil selon la revendication 12 ou 24, **caractérisé en ce que** deux leviers (4, 5) sont assemblés fixement en rotation avec l'axe de rotation (6) et sont décalés l'un par rapport à l'autre selon un angle prédéterminé.

26. Appareil selon l'une quelconque des revendications 12, 23, 24 ou 25, **caractérisé en ce que** deux leviers sont agencés de chaque côté du bâti de support, moyennant quoi les leviers sont agencés sur respectivement un côté du bâti de support (2).

27. Appareil selon l'une quelconque des revendications 22 à 26, **caractérisé en ce que** le guidage de levier (8) présente, dans la région d'entrée et dans la région de sortie d'une zone de traitement (20), des surfaces stabilisatrices appropriées (9, 10) pour le pivotement du bâti de support (2).

28. Appareil selon la revendication 27, **caractérisé en ce que** les surfaces stabilisatrices présentent des sections stabilisatrices (10) inclinées vers le haut et vers le bas.

29. Installation destinée au traitement de surface de pièces à usiner, en particulier des carrosseries de véhicule, comportant
- plusieurs zones de traitement (20) disposées les unes derrière les autres,
- un dispositif selon une ou plusieurs des revendications 12 à 18 comportant plusieurs bâtis de support (2), qui peuvent être mus en translation continue à une certaine distance les uns par rapport aux autres le long des zones de traitement (20),
- un dispositif d'amenée, avec lequel les pièces à usiner peuvent être amenées séparément à une cadence réglée sur la vitesse de déplacement des bâtis de support (2), et enfin
- un dispositif d'enlèvement, avec lequel, dans une région de sortie de l'installation, les pièces à usiner une fois traitées (1) peuvent être enlevées des bâtis de support (2) et transportées plus loin.

30. Installation selon la revendication 28, **caractérisée en ce que** les bâtis de support au-dessus, au-dessous et latéralement par rapport aux zones de traitement (20) peuvent être ramenés de la région de sortie vers la région d'entrée de l'installation.

31. Installation selon la revendication 29 ou 30, **caractérisée en ce que** les guidages d'axes de rotation (8) sont agencées au-dessus et au-dessous des zones de traitement (20) et sont conçus en mode continu sans fin dans la région d'entrée et de sortie de l'installation par des systèmes de recirculation.
